# EUROPEAN PATENT SPECIFICATION

(11) **EP 2 525 221 B1**
(45) Date of publication and mention of the grant of the patent: **08.08.2018**
(21) Application number: 12166808.1
(22) Date of filing: 04.05.2012
(51) Int. Cl.: G01N 21/27, G01N 31/22, G01N 21/64, H01M 12/06, H01M 8/04089, G01N 21/77

(54) **Calibration system and technique for photoluminescent oxygen sensors with zero point maintained with a metal-air battery**
Kalibriersystem und -technik für photolumineszente Sauerstoffsensoren mit einem durch eine Metall-Luft-Batterie aufrechterhaltenen Nullpunkt
Système et technique d'étalonnage pour capteurs d'oxygène photoluminescent à point zéro maintenue avec une batterie à métal-air

(30) Priority: 20.05.2011 US 201113112123
(43) Date of publication of application: 21.11.2012
(73) Proprietor: Mocon, Inc., Minneapolis, Minnesota 55428 (US)
(72) Inventor: Ascheman, Timothy A., Elk River, MN 55330 (US); Mayer, Daniel W., Wyoming, MN 55092 (US)
(74) Representative: Vossius & Partner Patentanwälte Rechtsanwälte mbB

(56) References cited:
- EP-A1- 2 455 744
- EP-A2- 0 697 460
- WO-A1-90/04268
- WO-A1-2010/053888
- JP-A- S5 535 927
- US-A- 5 371 016
- US-A- 6 060 196
- US-A1- 2009 029 402
- US-A1- 2011 154 881
- US-A1- 2011 223 678
- US-B2- 7 740 965

## Description

This application is a continuation-in-part of United States Patent Application Serial No. 12/950,018 filed November 19, 2010, which is a continuation-in-part of United States Patent Application Serial No. 12/633,110 filed December 8, 2009, which is a continuation-in-part of International Patent Application Serial No. PCT/US2009/063037 filed November 3, 2009, which claims the benefit of United States Provisional Application No. 61/112,434 filed November 7, 2008.

### BACKGROUND

Photoluminescent sensors or probes are a widely employed method of measuring analyte concentration, typically oxygen, within an enclosed space such as a package or container. Briefly, analyte concentration within a package or container can be measured by placing an analyte sensitive photoluminescent probe within the package or container, allowing the probe to equilibrate within the package or container, exciting the probe with radiant energy, and measuring the extent to which radiant energy emitted by the excited probe is quenched by the presence of the target analyte. Such optical sensors are available from a number of suppliers, including Presens Precision Sensing, GmbH of Regensburg, Germany, Oxysense of Dallas, Texas, United States, and Luxcel Biosciences, Ltd of Cork, Ireland.

Analytical instruments used to read such photoluminescent probes are commonly programmed with a calibration mode that permits calibration of the instrument by having the instrument read probes that have been exposed to mediums having known concentrations of the target analyte (*e.g.,* setting the instrument to calibration mode, reading a probe that has been placed within a container that is flushed with certified tank gas containing 0% analyte, and then reading a probe that has been placed within a container that is flushed with certified tank gas containing a known concentration(s) of analyte such as 100% analyte) WO 2010/053888 A1 discloses a calibration card for use in calibrating an optical sensor. The calibration card includes at least (i) a first mass of an oxygen sensitive fluorophore isolated from the environment and in fluid communication with an oxygen scavenging material effective for scavenging oxygen from the first mass of fluorophore, and (ii) a second mass of an oxygen sensitive fluorophore in fluid communication with the environment for exposing the second mass of fluorophore to an environmental concentration of oxygen.

While effective for accurately calibrating optical sensors, this calibration method is time consuming and expensive.

Accordingly, a substantial need exists for a low cost system and method for accurately and reliably calibrating instruments used to read photoluminescent sensors or probes.

### SUMMARY OF THE INVENTION

A first aspect of the invention is a calibration set, as defined in appended claim 1, for use in calibrating an analytical instrument capable of reading an oxygen sensitive photoluminescent probe from which the concentration of oxygen in a sample communicating with the probe can be determined.

A first embodiment of the first aspect of the invention is a calibration set as defined in appended claim 1.

A second exemplary embodiment of the first aspect of the invention is a calibration set as defined in appended claim 13.

The first and second masses of oxygen sensitive photoluminescent dye are preferably retained within separate vials.

A second aspect of the invention is a method of calibrating an optical oxygen sensor having a calibration mode, as defined in appended claim 9, that is capable of reading an oxygen sensitive photoluminescent probe from which the concentration of oxygen in a sample communicating with the probe can be determined.

A first embodiment of the second aspect includes the steps mentioned in appended claim 9.

A second exemplary embodiment of the second aspect includes the steps mentioned in appended claim 16.

A third exemplary embodiment of the second aspect includes the steps of (a) obtaining a calibration set according to the third embodiment of the first aspect of the invention, (b) setting the optical oxygen sensor to calibration mode, and (iii) sequentially taking an oxygen concentration reading from each of the masses of oxygen sensitive photoluminescent dye such that the oxygen concentration reading is correlated with the known oxygen concentration to which the mass of oxygen sensitive photoluminescent dye is exposed.

A fourth exemplary embodiment of the second aspect includes the steps of (a) obtaining a calibration set according to the fourth embodiment of the first aspect of the invention, (b) setting the optical oxygen sensor to calibration mode, and (iii) taking a reading from the first probe with the analytical instrument, (iv) correlating the value of the reading to a zero oxygen concentration, (v) taking a reading from the second probe with the analytical instrument, and (vi) correlating the value of the reading to the known oxygen concentration to which the second probe is exposed.
The following points are embodiments and exemplary embodiments of the invention. The scope of the invention is defined by appended claim 1.
**1.** A calibration set as defined in appended claim 1.
**2.** The calibration set of point 1, wherein the first and second masses of oxygen sensitive photoluminescent dye are retained within separate vials and at least the vial containing the first mass of oxygen sensitive photoluminescent dye is an oxygen barrier.
**3.** The calibration set of point 1, wherein the oxygen sensitive photoluminescent dye in both the first and second masses are the same.
**4.** The calibration set point 2, wherein the second mass of oxygen sensitive photoluminescent dye is in fluid communication with the environment whereby the second mass of photoluminescent dye is exposed to an environmental concentration of oxygen at environmental pressure.
**5.** The calibration set of point 4, wherein the vials are glass vials.
**6.** The calibration set of point 1, wherein the oxygen consumption rate for the activated battery resulting from self-discharge exceeds the permeation rate of oxygen into the sealed space containing the first mass of photoluminescent dye from the surrounding air.
**7.** The calibration set of point 1, wherein the battery continuously powers a load having a resistance of at least 500,000 ohms, whereby the battery is effective for continuously consuming oxygen from the hermetically sealed space containing the first mass of photoluminescent dye.
**8.** The calibration set of point 1, wherein the battery continuously powers a load having a resistance of at least 1,000,000 ohms, whereby the battery is effective for continuously scavenging oxygen from the hermetically sealed space containing the first mass of photoluminescent dye.
**9.** The calibration set of point 1, wherein the battery continuously powers a load having a resistance selected to limit the rate of oxygen consumable by the battery as between (1) the permeation rate of oxygen into the sealed space containing the first mass of photoluminescent dye from the surrounding air, and (2) ten times this rate.
**10.** The calibration set of point 1, wherein the battery continuously powers a load having a resistance selected to limit the rate of oxygen consumable by the battery as between (1) the permeation rate of oxygen into the sealed space containing the first mass of photoluminescent dye from the surrounding air, and (2) twice this rate.
**11.** The calibration set of point 1 wherein the metal-air battery is a zinc-air button battery.
**12.** The calibration set of point 2, wherein the vial containing the first mass of oxygen sensitive photoluminescent dye is marked with first indicia tagging the vial as a vial containing oxygen sensitive photoluminescent dye exposed to limited oxygen, and the vial containing the second mass of oxygen sensitive photoluminescent dye is marked with second indicia tagging the vial as a vial containing oxygen sensitive photoluminescent dye exposed to an environmental concentration of oxygen.
**13.** The calibration set of point 12, wherein the first indicia comprises at least the designation "0%" or "zero", and the second indicia comprises at least the designation "21%" or "air".
**14.** The calibration set of point 12, wherein the first and second indicia are antonyms of relative size.
**15.** The calibration set of point 1, wherein a plurality of activated metal-air batteries are retained with the hermetically sealed space.
**16.** The calibration set of point 15, wherein the activated metal-air batteries retained with the hermetically sealed space are sufficient to continue consuming any oxygen reaching the hermetically sealed space for at least one year after activation of the batteries.
**17.** A method of calibrating an optical oxygen sensor having a calibration mode, comprising the steps of:
   (a) obtaining a calibration set according to point 1,
   (b) setting the optical oxygen sensor to calibration mode, and
   (c) sequentially taking an oxygen concentration reading from each of the masses of oxygen sensitive photoluminescent dye such that the oxygen concentration reading is correlated with the known oxygen concentration to which the mass of oxygen sensitive photoluminescent dye is exposed.
**18.** The method of point 17, wherein step (c) comprises at least the step of taking an oxygen concentration reading from each of the masses of oxygen sensitive photoluminescent dye in a predetermined sequence.
**19.** The method of point 17, wherein step (c) comprises at least the steps of: (1) sensing the oxygen concentration to which one of the masses of oxygen sensitive photoluminescent dye is exposed using the optical sensor in calibration mode, (2) providing the optical sensor with data indicating which of the masses of oxygen sensitive photoluminescent dye on the calibration set was sensed, and (3) sensing the oxygen concentration to which the other mass of oxygen sensitive photoluminescent dye is exposed using the optical sensor in calibration mode.
**20.** The method of point 17, wherein step (c) comprises at least the steps of: (1) sensing the oxygen concentration to which one of the masses of oxygen sensitive photoluminescent dye is exposed using the optical sensor in calibration mode, (2) providing the optical sensor with data indicating the known oxygen concentration to which the one mass of oxygen sensitive photoluminescent dye is exposed, (3) sensing the oxygen concentration to which the other mass of oxygen sensitive photoluminescent dye is exposed using the optical sensor in calibration mode, and (4) providing the optical sensor with data indicating the known oxygen concentration to which the other mass of oxygen sensitive photoluminescent dye is exposed.
**21.** The method of point 17, wherein the oxygen sensitive photoluminescent dye in both the first and second masses are the same, and the first and second masses of oxygen sensitive photoluminescent dye are retained within separate vials
**22.** The method of point 17, wherein the oxygen consumption rate for the activated battery resulting from self-discharge exceeds the permeation rate of oxygen into the sealed space containing the first mass of photoluminescent dye from the surrounding air.
**23.** The method of point 17, wherein the battery continuously powers a load having a resistance of at least 500,000 ohms, whereby the battery is effective for continuously scavenging oxygen from the hermetically sealed space containing the first mass of photoluminescent dye.
**24.** The method of point 17, wherein the battery continuously powers a load having a resistance selected to limit the rate of oxygen consumable by the battery as between (1) the permeation rate of oxygen into the sealed space containing the first mass of photoluminescent dye from the surrounding air, and (2) ten times this rate.
**25.** The method of point 21, wherein the vial containing the first mass of oxygen sensitive photoluminescent dye is marked with first indicia tagging the vial as a vial containing oxygen sensitive photoluminescent dye exposed to limited oxygen, and the vial containing the second mass of oxygen sensitive photoluminescent dye is marked with second indicia tagging the vial as a vial containing oxygen sensitive photoluminescent dye exposed to an environmental concentration of oxygen.
**26.** A calibration set as defined in appended claim 13.
**27.** The calibration set of point 26 wherein the oxygen-sensitive photoluminescent dye is a transition metal complex selected from the group consisting of a ruthenium bipyridyl, a ruthenium diphenylphenanotroline, a platinum porphyrin, a palladium porphyrin, a phosphorescent complex of a tetrabenzoporphyrin, a chlorin, a porphyrin-ketone, an aza-porphyrin and a long-decay luminescent complex of iridium(III) or osmium(II).
**28.** The calibration set of point 26 wherein the oxygen-permeable carrier matrix is selected from the group consisting of silicone, polystryrene, polycarbonate, and polysulfone.
**29.** The calibration set of point 26 wherein the first and second probes are deposited as a liquid onto the bottom of separate small containers and allowed to dry.
**30.** The calibration set of point 29 wherein the small containers are vials formed from an oxygen barrier material.
**31.** The calibration set of point 30 wherein the vials are glass vials.
**32.** The calibration set of point 29, wherein the small container containing the first mass of oxygen sensitive photoluminescent dye is marked with first indicia tagging the small container as a container containing oxygen sensitive photoluminescent dye exposed to limited oxygen, and the small container containing the second mass of oxygen sensitive photoluminescent dye is marked with second indicia tagging the small container as a small container containing oxygen sensitive photoluminescent dye exposed to an environmental concentration of oxygen.
**33.** A method of calibrating an analytical instrument having a calibration mode and capable of reading a photoluminescent oxygen probe or plurality of photoluminescent oxygen probes from which the concentration of oxygen in a sample or set of samples communicating with the probe can be determined, comprising the steps of:
   (a) obtaining a calibration set according to point 26,
   (b) setting the analytical instrument to calibration mode,
   (c) taking a reading from the first probe with the analytical instrument,
   (d) correlating the value of the reading to a zero oxygen concentration,
   (e) taking a reading from the second probe with the analytical instrument, and
   (f) correlating the value of the reading to the known oxygen concentration to which the second probe is exposed.
**34.** The method of point 33 wherein the steps of taking a reading from the first and second probes are performed in a predetermined sequence.
**35.** The method of point 33 further comprising the step of providing the analytical instrument with data indicating which probe on the calibration set was read first.
**36.** The method of point 33 wherein readings and correlations are based upon photoluminescence lifetime.

### BRIEF DESCRIPTION OF THE DRAWINGS

Figure 1 is an exploded perspective view of one example which does not fall within the scope of the present invention.
Figures 2 is an exploded cross-sectional side view of the example which does not fall within the scope of the present invention depicted in Figure 1 taken along line 2-2.
Figure 3 is a top assembled view of the example which does not fall within the scope of the present invention depicted in Figure 1.
Figure 4 is a cross-sectional side view of the example which does not fall within the scope of the present invention depicted in Figure 3 taken along line 3-3.
Figure 5 is an enlarged cross-sectional detailed side view of a portion of the example which does not fall within the scope of the present invention depicted in Figure 4 encompassing the second or 0% mass of photoluminescent composition and associated battery.
Figure 6 is an enlarged top view of a portion of the example which does not fall within the scope of the present invention depicted in Figure 4 encompassing the second or 0% mass of photoluminescent composition and associated battery.
Figure 7 is a microscopically enlarged cross-sectional side view of one exemplary embodiment of a photoluminescent composition suitable for use as the first and second masses of photoluminescent composition in the present invention.
Figure 8 is a side view of an exemplary embodiment of the invention.
Figure 9 is a cross-sectional side view of exemplary embodiment of the invention depicted in Figure 8.
Figure 10 is a grossly enlarged cross-sectional side view of the closed end of the exemplary embodiment of the invention depicted in Figure 9.

### DETAILED DESCRIPTION OF A PREFERRED EMBODIMENT

### Definitions

As used herein, including the claims, the phrase ***"metal-air battery"*** means an electrochemical battery or fuel cell powered by oxidizing a metal, such as cadmium, lead, lithium or zinc, with ambient oxygen, typically air.

As used herein, including the claims, the phrase ***"activated metal-air battery"*** means a metal-air battery with air access hole(s) to the cathode are open to the environment (*i.e.,* the oxygen barrier film typically placed over the air access hole(s) has been removed to permit air to enter the cell).

As used herein, including the claims, the phrase ***"near zero",*** when used to describe a concentration of oxygen in a sample, means less than 0.01% oxygen.

As used herein, including the claims, the phrase ***"oxygen impenneable"*** means a material that when formed into a 1 mil (25.4 µm) film has an oxygen transmission rate of less than 100 c³/m² day when measured in accordance with ASTM F 1927.

As used herein, including the claims, the phrase ***"oxygen barrier"*** means a film, including coated, metalized and multiple layer films, that are impervious to oxygen (such as a layer of metal) or have an oxygen transmission rate of less than 20 c³/m² day when measured in accordance with ASTM F 1927.

As used herein, including the claims, the phrase ***"oxygen sensitivity"*** or ***"sensitivity to oxygen"*** means sensitivity measured by luminescence quenching.

As used herein, including the claims, the phrase ***"thin film"*** means a film having a thickness of less than 10µm.

As used herein, including the claims, the phrase ***"small container"*** means a container will a fillable volume of less than 20 ml.

### Nomenclature

- **10**: Calibration Card
- **10a**: Top of Calibration Card
- **10b**: Bottom of Calibration Card
- **10r**: Right Side of Calibration Card
- **10s**: Left Side of Calibration Card
- **10v**: Upper Major Surface of Calibration Card
- **10w**: Lower Major Surface of Calibration Card
- **19**: Exposure Channel through Spacer and Lower Layers
- **20**: Intermediate Spacer Layer
- **20v**: Upper Major Surface of Spacer Layer
- **20w**: Lower Major Surface of Spacer Layer
- **29**: Retention Well in Spacer Layer
- **31**: Upper Adhesive Layer
- **32**: Lower Adhesive Layer
- **41**: Upper Cover Layer
- **42**: Lower Base Layer
- **50**: Masses Photoluminescent Compositions
- **51**: First or 0% Mass of Solid State Photoluminescent Composition
- **52**: Second or 21% Mass of Solid State Photoluminescent Composition
- **58**: Carrier Matrix
- **59**: Oxygen-Sensitive Photoluminescent Dye
- **60**: Indicia
- **61**: First Indicia Indicating First or 0% O₂ exposure
- **62**: Second Indicia Indicating Second or 21% O₂ exposure
- **70**: Battery
- **71**: Load Powered by Battery
- **100**: Calibration Set
- **120**: Container or Vial
- **120a**: Top of Container or Vial
- **120b**: Bottom of Container or Vial
- **121**: Low O₂ Container or Vial
- **122**: High O₂ Container or Vial
- **129**: Retention Well in Container or Vial
- **140**: Stopper

### Construction

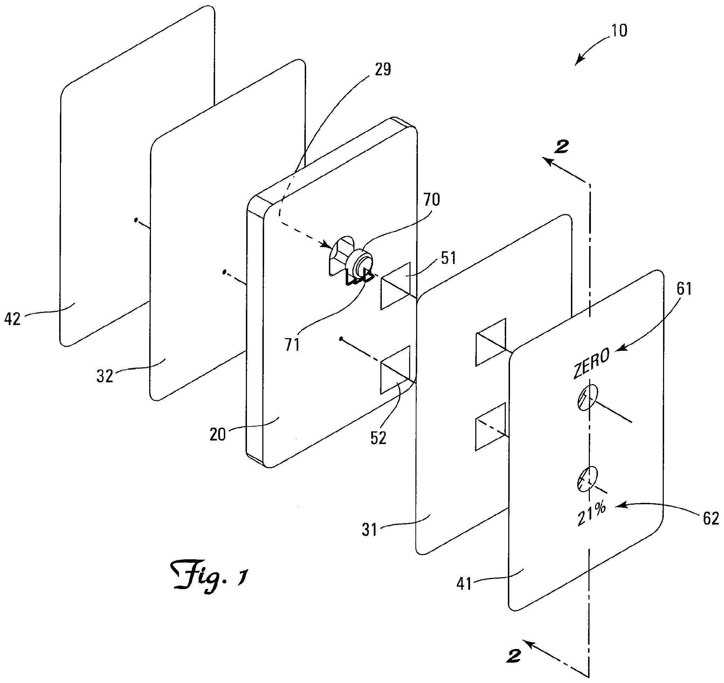

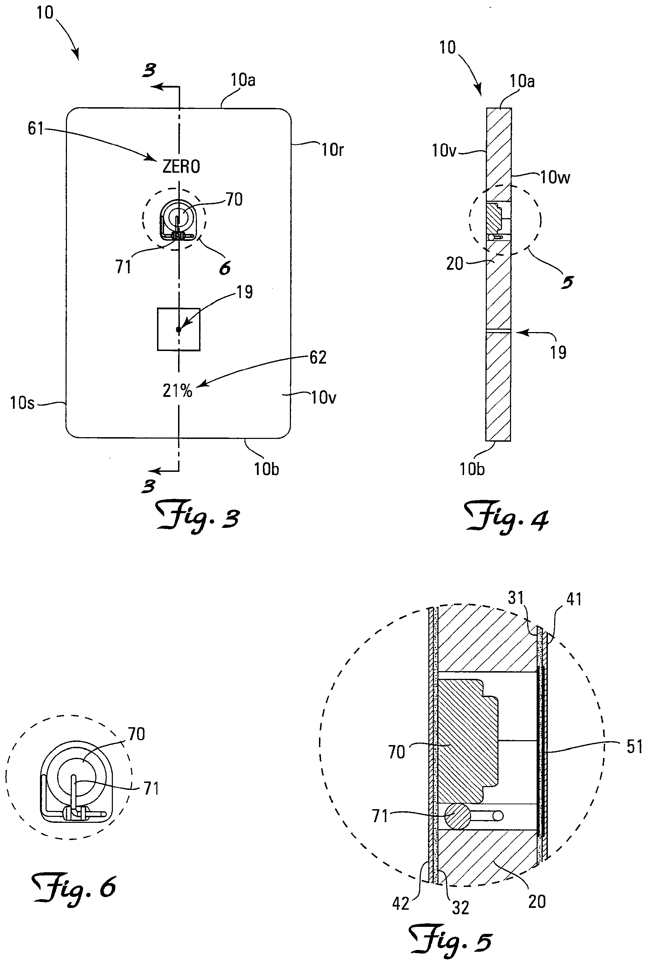

Referring generally to Figures 1-4, a first example is a calibration card **10** for use in calibrating an analytical instrument (not shown) for reading photoluminescent sensors or probes (not shown). The calibration card **10** includes first **51** and second **52** masses of an oxygen sensitive photoluminescent composition **50.** The first mass of oxygen sensitive photoluminescent composition **51** is isolated from the surrounding environment and in fluid communication with an oxygen consuming zinc-air battery **70** for scavenging oxygen from the hermetically sealed first mass **51.** The second mass of oxygen sensitive photoluminescent composition **52** is in fluid communication with the surrounding environment for exposing the second mass **52** to an environmental concentration of oxygen.

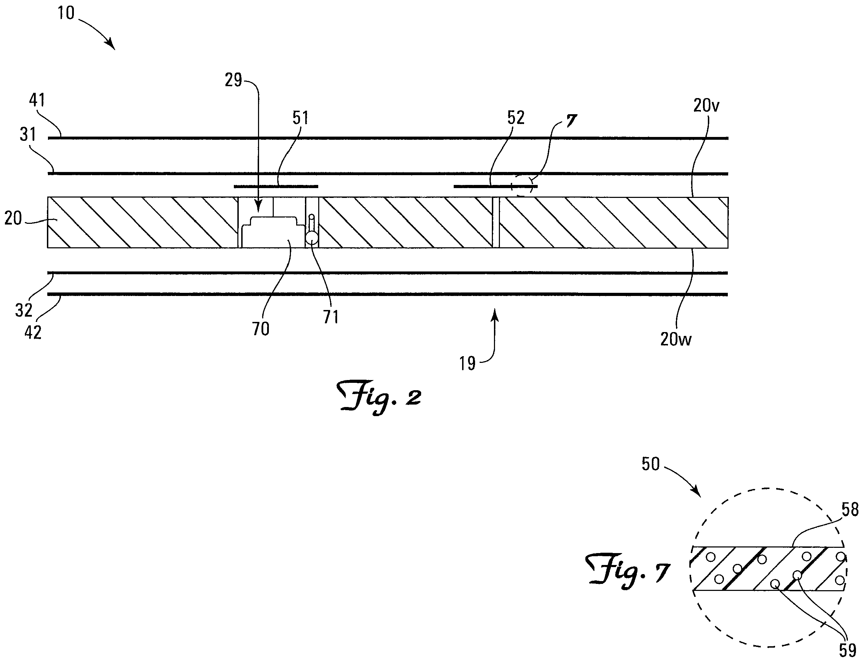

Referring to Figure 7, the first mass **51** (also referenced as the 0% mass for convenience) and the second mass **52** (also referenced as the 21% mass for convenience) each comprise an oxygen-sensitive photoluminescent dye **59** that is the same as the oxygen-sensitive photoluminescent dye employed in the probes (not shown) read by the instrument (not shown), embedded within an oxygen permeable carrier matrix **58** that is the same as the carrier matrix employed in the probes (not shown) read by the instrument (not shown).

Figures 1 and 2 depict the constructional components of one example of a calibration card **10**. The calibration card **10** depicted in Figures 1 and 2, includes laterally spaced first and second masses of oxygen sensitive photoluminescent composition **51** and **52** (collectively referenced as photoluminescent masses **50**) mounted onto a first major surface **20v** of an intermediate spacer layer **20** and sandwiched between an upper cover layer **41** and a lower base layer **42.** The spacer layer **20,** upper cover layer **41,** and lower base layer **42** are all effective as an oxygen barrier. The first mass of oxygen sensitive photoluminescent composition **51** is in fluid communication with an activated metal-air battery **70** retained within a retention well **29** within the spacer layer **20.** The second mass of oxygen sensitive photoluminescent composition **52** is placed in fluid communication with the surrounding environment via a channel **19** through the spacer layer **20** and lower base layer **42.** Adhesive layers **31** and **32** secure the upper cover layer **41** and lower base layer **42** to the upper major surface **20v** and lower major surface **20w** of the spacer layer **20,** respectively, thereby sandwiching the first and second photoluminescent masses **50** between the oxygen barrier upper cover layer **41** and lower base layer **42.**

The calibration card **10** has a top edge **10a,** a bottom edge **10b,** a right side edge **10r,** a left side edge **10s,** an upper major surface **10v** and a lower major surface **10w.** The card **10** should have a length of about 4 to 20 cm, a width of about 4 to 20 cm, and a thickness of less than 1 cm. A card **10** smaller than this is prone to being lost or misplaced while a card **10** larger than this becomes unnecessarily bulky. The card **10** preferably has a length of about 6 to 10 cm, a width of about 4 to 8 cm, and a thickness of about 0.5 to 1 cm, and most preferably approximates the length and width of a standard credit card (*i.e.,* about 8.5 cm long and 5.5 cm wide).

The card **10** should be durable and wear resistant.

The intermediate spacer layer **20** contributes the bulk of the structural integrity to the card **10** and provides the thickness necessary to accommodate the metal-air battery **70.** The spacer layer **20** may be transparent, translucent or opaque as desired. The spacer layer **20** should be relatively impermeable to O₂ for purposes of limiting the rate at which O₂ can permeate through the edges (**10a, 10b, 10r** and **10s**) of the card **10** and into contact with the first mass of oxygen sensitive photoluminescent composition **51.** Suitable materials include specifically, but not exclusively, plastics such as an acrylic or polyethylene terephthalate; and metals such as aluminum, copper or steel.

The cover layer **41** provides some additional structural integrity to the card **10** and serves as a protective covering for the photoluminescent masses **50.** The cover layer **41** needs to be transparent or translucent at least at the specific wavelengths at which the photoluminescent masses **50** absorb and emit energy. The cover layer **41** serves as an oxygen barrier for reducing the rate at which oxygen permeates through the card **10** and into contact with the first mass of oxygen sensitive photoluminescent composition **51.** Suitable materials include specifically, but not exclusively, plastics. Preferred plastics are mylar and polyethylene terephthalate.

The base layer **42** also provides some additional structural integrity to the card **10.** The base layer **42** need not be transparent or translucent as the photoluminescent masses **50** are not interrogated through the base layer **42.** The base layer **42,** as with the cover layer **41,** serves as an oxygen barrier for reducing the rate at which oxygen permeates through the card **10** and into contact with the first mass of oxygen sensitive photoluminescent composition **51.** Suitable materials include specifically, but not exclusively, plastics. Preferred plastics are mylar and polyethylene terephthalate.

Adhesive layers **31** and **32** may be selected from a wide variety of adhesives suitable for use in laminating metal and plastic layers together, including various hot melt and pressure-sensitive adhesives. It may also be possible to forgo the use of the adhesive layer when the cover layer **41** and base layer **42** are capable of being bound directly to the intermediate spacer layer **20** such as by heat welding.

Referring to Figure 7, the oxygen sensitive photoluminescent masses **50** include an oxygen-sensitive photoluminescent dye **59** embedded within an oxygen-permeable carrier matrix **58.**

The same oxygen sensitive photoluminescent masses **50** are used for both the 0% and the 21% masses **51** and **52,** and need to match the photoluminescent masses **50** used in the sensors or probes (not shown) that are read by the analytical instrument (not shown) being calibrated. Most preferably, the oxygen sensitive photoluminescent masses **50** and the probes (not shown) that are intended to be read by the instrument (not shown) are produced in the same run from the same batch of photoluminescent composition.

The oxygen-sensitive photoluminescent dye **59** may be selected from any of the well-known oxygen sensitive photoluminescent dyes used in the construction of oxygen sensitive photoluminescent probes (not shown). A nonexhaustive list of such oxygen sensitive photoluminescent dyes **59** includes specifically, but not exclusively, ruthenium(II)-bipyridyl and ruthenium(II)-diphenylphenanothroline complexes, porphyrin-ketones such as platinum(II)-octaethylporphine-ketone, platinum(II)-porphyrin such as platinum(II)-tetrakis(pentafluorophenyl)porphine, palladium(II)-porphyrin such as palladium(II)-tetrakis(pentafluorophenyl)porphine, phosphorescent metallocomplexes of tetrabenzoporphyrins, chlorins, azaporphyrins, and long-decay luminescent complexes of iridium(III) or osmium(II).

The oxygen-sensitive photoluminescent dye **59** is compounded with a suitable carrier matrix **58.** Compositions used as the carrier matrix **58** are oxygen-permeable compositions, preferably highly oxygen permeable compositions. One of routine skill in the art is capable of selecting such oxygen-permeable carrier compositions **58.** A nonexhaustive list of polymers suitable for use as the carrier matrix **58** includes specifically, but not exclusively, silicone, polystryrene, polycarbonate, polysulfone, and some other polymers and co-polymers.

Typically, the oxygen sensitive photoluminescent masses **50** are coated onto a support layer (not shown). The support layer is typically a sheet or film formed from a material that is compatible with the oxygen sensitive photoluminescent masses **50.** One of routine skill in the art is capable of selecting suitable support layer.

An activated metal-air battery **70** is retained within a retention well **29** in the intermediate spacer layer **20** and in fluid communication with the 0% oxygen sensitive photoluminescent mass **51** for consuming oxygen from around the hermetically sealed 0% oxygen sensitive photoluminescent mass **51.**

Metal-air batteries, such as a zinc-air battery, are different from most other batteries in that they "breath" oxygen from the air for use as the cathode reactant. The electrochemical system can be more formally defined as zinc/potassium hydroxide/oxygen, but "zinc-air" is the widely used common name. Metal-air batteries are commercially available from a variety of sources, including The Gillette Company under the brand name Duracell®. A typical zinc-air cell consists of a zinc anode, an aqueous alkaline electrolyte and an air cathode. Power is derived from the reduction of oxygen at the cathode, and the oxidation of zinc at the anode. The simplified net reaction is shown below:

2Zn + O₂ ⇒ 2ZnO

The anode in a zinc air cell is typically powdered zinc amalgam. The zinc powder typically contains a very low level of mercury to prevent internal pressure buildup due to hydrogen evolution from the self-discharge of the zinc in the electrolyte. A gelling agent is also usually mixed with the zinc amalgam to maintain the uniformity of the zinc powder-electrolyte mixture during discharge.

In the cell reaction, the zinc in the anode is oxidized to form zinc hydroxide in the form of the soluble zincate [Zn(OH)₄²⁻] ion. The half reaction for the anode is shown below:

Zn + 4OH- -⇒ Zn(OH)₄²⁻ + 2e⁻

The zinc hydroxide accumulates around the zinc particle, but does not impede either ionic or particle-to-particle conductance until the zinc is fully oxidized. As the discharge proceeds, the zincate ions eventually precipitate to form zinc oxide (ZnO).

Zn(OH)₄²⁻ ⇒ ZnO + H₂O + 2OH⁻

The air cathode in a zinc-air cell is typically a mixture of carbon, Teflon™, and a small amount of manganese dioxide impressed onto a nickel-plated screen. This material is then laminated with a Teflon™ layer on one side and a separating membrane on the other. The Teflon™ layer allows gases, most importantly oxygen, to diffuse into and out of the cell, and also provides resistance to leakage. The separator acts as an ion conductor between the electrodes and as an insulator to prevent internal short-circuiting.

Atmospheric oxygen reacts with catalysts in the air electrode and electrolyte to produce hydroxide ions. The half reaction for the air cathode is shown below:

O₂

The alkaline electrolyte typically employed in a zinc air cell is an aqueous solution of potassium hydroxide with a small amount of zinc oxide to prevent self-discharge of the anode. Potassium hydroxide provides good ionic conductance between the anode and cathode to permit efficient discharge of the cell.

The anode subassembly includes the anode can and the insulator. An exemplary anode can, which holds the zinc anode, is a tri-clad material comprised of a copper interior lining for good chemical compatibility, a stainless steel layer in the middle for strength, and nickel layer on the outside for good electrical contact. A nylon insulator surrounds this can and insulates the negative terminal from the positive terminal. A sealant coating is typically applied to the insulator prior to its assembly with the anode can. The cathode subassembly consists of the cathode can and the air electrode. An exemplary cathode can is made of nickel plated steel, and contains multiple air holes punched into the bottom to provide air access to the cathode. These air holes provide the pathway for oxygen to enter the cell.

A porous membrane is typically placed directly over the holes to facilitate uniform air distribution across the air electrode. A loose layer of Teflon™ is typically provided on top of this membrane to help form the cathode seal. The air electrode itself (*i.e.* cathode) is oriented with its Teflon™ side toward the air holes. There is an interference between the ends of the nickel screen that protrude from the perimeter of the cathode, and the cathode can to form a low resistance contact. The zinc-anode mix and the electrolyte are dispensed into the anode subassembly, over which the cathode subassembly is placed and sealed.

Once constructed, a tab is placed over the air holes and attached via a mild adhesive to seal the cell and prevent environmental oxygen from entering the cell and contacting the cathode. The cell is activated by simply peeling off the tab.

The activated battery **70** must have an oxygen consumption rate that exceeds the permeation rate of oxygen into the sealed space containing the first mass of photoluminescent composition **51** from the surrounding air. An activated battery **70** that consumes oxygen at a rate that is less than the permeation rate of oxygen into the sealed space containing the first mass of photoluminescent composition **51** will result in an inaccurate calibration as the first mass of photoluminescent composition **51** will be exposed to an oxygen concentration well in excess of 0%. At the other extreme, an activated battery **70** that consumes oxygen at a rate that is significantly greater than the permeation rate of oxygen into the sealed space containing the first mass of photoluminescent composition **51** will cause the card **10** to structurally deform due to an internal pressure buildup caused by hydrogen evolution from a continuous and prolonged operation in an oxygen starved environment. Hence, the activated battery **70** preferably consumes oxygen at a rate that is only slightly greater than the permeation rate of oxygen into the sealed space containing the first mass of photoluminescent composition **51,** with a generally acceptable range of between two to ten times the permeation rate of oxygen into the sealed space. With selection of good oxygen barrier materials for use as the intermediate spacer layer **20,** the cover layer **41** and the base layer **42,** the oxygen consumption rate achieved by an activated battery resulting from self-discharge is sufficient. However, should a higher rate of oxygen consumption be necessary or desired, a suitable load **71** may be operably connected to the battery **70.** Typically, a load **71** having a resistance of at least 100,000 Ω, preferably at least 500,000 Ω, and most preferably at least 1,000,000 Ω will provide the necessary and desired rate of oxygen consumption.

The upper major surface **10v** of the card **10** is imprinted with first indicia **61** and second indicia **62** (collectively indicia **60**) for identifying the first photoluminescent mass **51** as the mass representative of a probe (not shown) exposed to limited oxygen (*e.g*., 0%, Zero, Low, Minimum, etc.), and identifying the second photoluminescent mass **52** as the mass representative of a probe (not shown) exposed to an environmental concentration of oxygen (*e.g.,* 21%, Twenty One, High, Maximum, Atmosphere, etc.).

The lifespan of the calibration card **10** is dictated by the effective life of the metal-air battery **70** employed in the card **10,** which will typically be between one and three years from activation of the battery **70.**

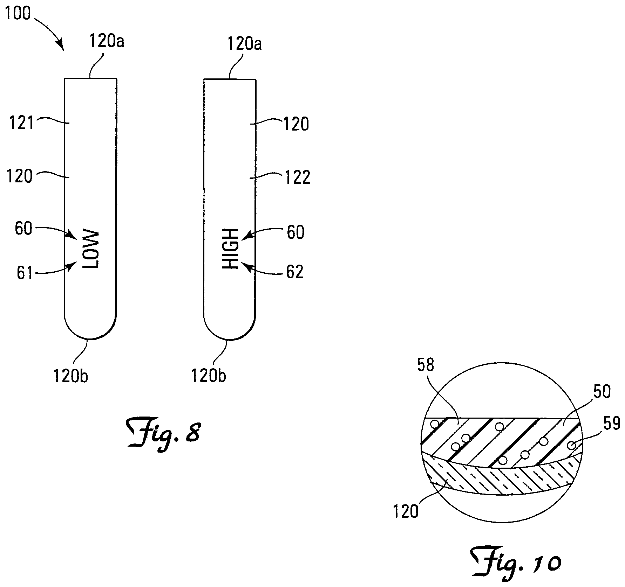

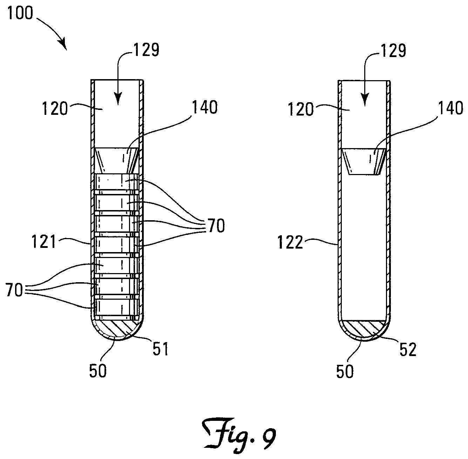

Referring generally to Figures 8 and 9, shown is an exemplary embodiment of the invention is a calibration set **100** for use in calibrating an analytical instrument (not shown) for reading photoluminescent sensors or probes (not shown). The calibration set **100** includes first **51** and second **52** masses of an oxygen sensitive photoluminescent composition **50** retained within separate containers or vials **120.** The first mass of oxygen sensitive photoluminescent composition **51** is retained within the well **129** of a first container or vial **121,** isolated from the surrounding environment by a stopper **140** or other suitable sealing device, and in fluid communication with at least one oxygen consuming zinc-air battery **70** for scavenging oxygen from the hermetically sealed first mass **51.** The second mass of oxygen sensitive photoluminescent composition **52** is similarly retained within the well **129** of a second container or vial **122** and isolated from the surrounding environment by a stopper **140** or other suitable sealing device. However, the well **129** of the second container or vial **122** does not include an oxygen consuming zinc-air battery, but rather is filled with air containing an environmental concentration of oxygen (*i.e.,* 20.98%) so that the second mass of oxygen sensitive photoluminescent composition **52** is and remains in fluid communication with an environmental concentration of oxygen. The second mass of oxygen sensitive photoluminescent composition **52** is preferably placed in fluid communication with the surrounding environment via a channel the stopper **140.**

The containers or vials **120** each have an open top end **120a** and a closed bottom end **120b.** The containers or vials **120** preferably have a fillable volume of less than 50 ml, with a preference for small containers having a fillable volume of between 2 and 20 ml.

The bottom **120b** of each container or vial **120** is coated with a mass of oxygen sensitive photoluminescent composition **50.** The bottom **120b** of the containers or vials **120** can be coated with oxygen sensitive photoluminescent composition **50** by depositing the composition **50** into the container or vial **120** in liquid form and allowed to dry.

The containers or vials **120** can be constructed from substantially any material possessing the necessary structural integrity. The containers or vials **120** need to be transparent or translucent at least at the specific wavelengths at which the photoluminescent masses **50** absorb and emit energy. The first container or vial **121** also serves as an oxygen barrier for reducing the rate at which oxygen permeates through the container or vial **121** and into contact with the first mass of oxygen sensitive photoluminescent composition **51.** The first **121** and second **122** containers or vials are preferably identical to one another. Suitable materials include specifically, but not exclusively, glass and certain plastics. Glass is preferred.

The containers or vials **120** in the calibration set **10** are preferably selected to match the size, shape, composition and configuration of the test containers or vials read or interrogated by the analytical instrument being calibrated. This is of particular value when the instrument is customized to handle and read specific containers or vials (*e.g*., designed to transport and read 5 ml Epindorf vials).

The stopper **140,** or other suitable sealing device, is preferably selected to provide an excellent seal against the sidewall of the container or vial **120** and serve as an oxygen barrier. The stopper **140** need not be transparent or translucent at least at the specific wavelengths at which the photoluminescent masses **50** absorb and emit energy as interrogation of the oxygen sensitive photoluminescent composition **50** is intended to be taken through the bottom **120b** of the containers or vials **120.** Suitable materials for use as a stopper **140** include specifically, but not exclusively, rubber, cork, rigid insert fitted with an o-ring seal, etc. Generally, rubber is preferred as they are inexpensive and readily available.

Referring to Figure 8, the outside of the containers or vials **120** are imprinted with first indicia **61** and second indicia **62** (collectively indicia **60**) for identifying the first photoluminescent mass **51** as the mass representative of a probe (not shown) exposed to limited oxygen (*e.g*., 0%, Zero, Low, Minimum, etc.), and identifying the second photoluminescent mass **52** as the mass representative of a probe (not shown) exposed to an environmental concentration of oxygen (*e.g.,* 21%, Twenty One, High, Maximum, Atmosphere, etc.).

The lifespan of the calibration set **100** is dictated by the effective life of the metal-air battery **70** in the containers or vials **120.** The lifespan can be enhanced by employing more than one battery **70.** The size and/or number of batteries **70** is preferably selected to ensure a lifespan of at least one year from activation of the battery **70.**

### Use

The calibration card **10** and the calibration set **100** can be used to quickly and easily calibrate an optical oxygen sensor (not shown) having a calibration mode. With the calibration card **10,** calibration of an optical oxygen sensor (not shown) simply involves the steps of (1) setting the optical sensor to calibration mode, and (2) sequentially taking an oxygen concentration reading from each of the masses of oxygen sensitive photoluminescent composition **51** and **52** such that the oxygen concentration reading is correlated with the known oxygen concentration to which the mass of oxygen sensitive photoluminescent composition **51** and **52** is exposed.

Correlation of the oxygen concentration reading to the oxygen sensitive photoluminescent composition **51** or **52** from which the reading was taken can be accomplished in various ways. One technique is to take the oxygen concentration readings in a predetermined sequence previously input into the optical oxygen sensor (not shown). A second technique is to automatically provide the optical oxygen sensor (not shown) with additional data each time a reading is taken effective for indicating which of the masses of oxygen sensitive photoluminescent composition **51** and **52** was sensed (*e.g*., a unique bar code provided next to each mass **50** that is read each time a mass **50** is read). Yet a third technique is to provide the optical oxygen sensor (not shown) with additional data each time a reading is taken effective for indicating the oxygen concentration to which the sensed mass of oxygen sensitive photoluminescent composition **51** and **52** was exposed at the time of the reading (*e.g*., user input of 0 after the 0% mass **51** is read and user input of 21 after the 21% mass **52** is read).

Preferably, both the oxygen probes (not shown) and the calibration card **10** or calibration set **100** operate in photoluminescence lifetime mode. Luminescence lifetime measurements can be performed by any of the known methods, including specifically but not exclusively direct measurement of luminescence decay, measurement of luminescence phase shift, anisotropy, or any other parameter which is related directly or indirectly to the luminescence lifetime of the probe and the first and second masses **51** and **52.**

## Claims

1. A calibration set (100) for use in calibrating an optical oxygen sensor, comprising
- i) a first container (121) having a well (129), said well (129) defining a hermetically sealed space isolated from environmental oxygen,
- ii) a first mass of an oxygen sensitive photoluminescent dye (51) retained within said hermetically sealed space defined by the well (129) of said first container (121) so as to isolate the first mass of an oxygen sensitive photoluminescent dye (51) from environmental oxygen, and
- iii) an activated metal-air battery (70) in fluid communication with the first mass of an oxygen sensitive photoluminescent dye (51) and retained within said hermetically sealed space defined by the well (129) of said first container (121), whereby the activated metal-air battery (70) is arranged to consume any oxygen in the hermetically sealed space, and
- iv) a second mass of an oxygen sensitive photoluminescent dye (52) in fluid communication with fluid having an environmental concentration of oxygen, and
- v) a second container (122) having a well (129) for retaining said second mass of an oxygen sensitive photoluminescent dye (52).

2. The calibration set (100) of claim 1, wherein (i)
the first and second containers (121, 122) are separate vials, and (ii) at least the vial containing the first mass of oxygen sensitive photoluminescent dye (51) is an oxygen barrier.

3. The calibration set (100) of claim 1 or 2, wherein the oxygen sensitive photoluminescent dye in both the first and the second masses (51, 52) are the same.

4. The calibration set (100) of claim 2 or 3, wherein the second mass of oxygen sensitive photoluminescent dye (52) is in fluid communication with the environment whereby the second mass of photoluminescent dye (52) is exposed to an environmental concentration of oxygen at environmental pressure.

5. The calibration set (100) of any of claims 1 to 4, wherein the oxygen consumption rate for the activated metal-air battery (70) resulting from self-discharge exceeds the permeation rate of oxygen into the sealed space containing the first mass of photoluminescent dye from the surrounding air.

6. The calibration set (100) of any of claims 1 to 5, wherein the calibration set (100) comprises a load (71), and wherein the activated metal-air battery (70) is arranged to continuously power the load (71) having a resistance of at least 500,000 ohms, whereby the activated metal-air battery (70) is effective for continuously consuming oxygen from the hermetically sealed space containing the first mass of photoluminescent dye (51).

7. The calibration set (100) of any of claims 1 to 5, wherein the calibration set (100) comprises a load (71), and wherein the activated metal-air battery (70) is arranged to continuously power the load (71) having a resistance selected to limit the rate of oxygen consumable by the activated metal-air battery (70) as between (1) the permeation rate of oxygen into the sealed space containing the first mass of photoluminescent dye (51) from the surrounding air, and (2) twice this rate.

8. The calibration set (100) of any of claims 1 to 7, comprising a plurality of activated metal-air batteries (70) which are retained with the hermetically sealed space and are sufficient to continue consuming anv oxygen reaching the hermetically sealed space for at least one year after activation of the activated metal-air batteries (70).

9. A method of calibrating an optical oxygen sensor having a calibration mode, comprising the steps of:
(a) obtaining a calibration set (100) according to any of claims 1-8,
(b) setting the optical oxygen sensor to calibration mode, and
(c) sequentially taking an oxygen concentration reading from each of the masses of oxygen sensitive photoluminescent dye (51, 52) such that the oxygen concentration reading is correlated with the known oxygen concentration to which the mass of oxygen sensitive photoluminescent dye (51, 52) is exposed.

10. The method of claim 9 , wherein step (c) comprises at least the step of taking an oxygen concentration reading from each of the masses of oxygen sensitive photoluminescent dye (51, 52) in a predetermined sequence.

11. The method of claim 9 or 10, wherein step (c) comprises at least the steps of: (1) sensing the oxygen concentration to which one of the masses of oxygen sensitive photoluminescent dye (51, 52) is exposed using the optical sensor in calibration mode, (2) providing the optical sensor with data indicating which of the masses of oxygen sensitive photoluminescent dye (51, 52) on the calibration set (100) was sensed, and (3) sensing the oxygen concentration to which the other mass of oxygen sensitive photoluminescent dye (51, 52) is exposed using the optical sensor in calibration mode.

12. The method of any of claims 9 to 11, wherein step(c) comprises at least the steps of (1) sensing the oxygen concentration to which one of the masses of oxygen sensitive photoluminescent dye (51, 52) is exposed using the optical sensor in calibration mode, (2) providing the optical sensor with data indicating the known oxygen concentration to which the one mass of oxygen sensitive photoluminescent dye (51, 52) is exposed, (3) sensing the oxygen concentration to which the other mass of oxygen sensitive photoluminescent dye (52, 51) is exposed using the optical sensor in calibration mode, and (4) providing the optical sensor with data indicating the known oxygen concentration to which the other mass of oxygen sensitive photoluminescent dye (52, 51) is exposed.

13. The calibration set (100) of claims 1-8 wherein (i) the optical oxygen sensor is an analytical instrument capable of reading a photoluminescent oxygen probe from which the concentration of oxygen in a sample communicating with the probe can be determined, wherein the probe comprises an oxygen-sensitive photoluminescent dye embedded within an oxygen-permeable carrier matrix, and (ii) the first and second masses of oxygen sensitive photoluminescent dye (51, 52) are each embedded within an oxygen-permeable carrier matrix (58) so as to form probes.

14. The calibration set (100) of claim 13 wherein the first and second probes (51, 52, 58) are probes formed by depositing a liquid onto the bottom of separate first and second containers (121, 122) and allowed to dry.

15. The calibration set (100) of claim 14 wherein the separate first and second containers (121, 122) are vials formed from an oxygen barrier material.

16. A method of calibrating an analytical instrument having a calibration mode and capable of reading a photoluminescent oxygen probe or plurality of photoluminescent oxygen probes from which the concentration of oxygen in a sample or set of samples communicating with the probe can be determined, comprising the steps of:
(a) obtaining a calibration set (100) according to any of claims 13-15,
(b) setting the analytical instrument to calibration mode,
(c) taking a reading from the first probe (51) with the analytical instrument,
(d) correlating the value of the reading to a zero oxygen concentration,
(e) taking a reading from the second probe (52) with the analytical instrument, and
(f) correlating the value of the reading to the known oxygen concentration to which the second probe (52) is exposed.

17. The method of claim 16 wherein the steps of taking a reading from the first and second probes (51, 52) are performed in a predetermined sequence.

18. The method of claim 16 or 17 further comprising the step of providing the analytical instrument with data indicating which probe (51, 52) on the calibration set (100) was read first.

19. The method of any of claims 16 to 18, wherein readings and correlations are based upon photoluminescence lifetime.

## Patentansprüche

1. Kalibriersatz (100) zum Gebrauch beim Kalibrieren eines optischen Sauerstoffsensors mit:
i) einem ersten Behälter (121) mit einer Vertiefung (129), wobei die Vertiefung (129) einen hermetisch abgedichteten Raum bildet, der von Umgebungssauerstoff isoliert ist,
ii) einer ersten Masse eines sauerstoffempfindlichen Fotolumineszenzfarbstoffs (51), die in dem hermetisch abgedichteten Raum bewahrt wird, der durch die Vertiefung (129) des ersten Behälters (121) gebildet ist, um die erste Masse eines sauerstoffempfindlichen Fotolumineszenzfarbstoffs (51) von Umgebungssauerstoff zu isolieren, und
iii) einer aktivierten Metall-Luft-Batterie (70), die in Fluidkommunikation mit der ersten Masse eines sauerstoffempfindlichen Fotolumineszenzfarbstoffs (51) steht und im hermetisch abgedichteten Raum bewahrt wird, der durch die Vertiefung (129) des ersten Behälters (121) gebildet ist, wodurch die aktivierte Metall-Luft-Batterie (70) so angeordnet ist, dass sie etwaigen Sauerstoff im hermetisch abgedichteten Raum verbraucht, und
iv) einer zweiten Masse eines sauerstoffempfindlichen Fotolumineszenzfarbstoffs (52) in Fluidkommunikation mit Fluid, das eine Umgebungskonzentration von Sauerstoff hat, und
v) einem zweiten Behälter (122) mit einer Vertiefung (129) zum Bewahren der zweiten Masse eines sauerstoffempfindlichen Fotolumineszenzfarbstoffs (52).

2. Kalibriersatz (100) nach Anspruch 1, wobei (i) der erste und zweite Behälter (121, 122) getrennte Fläschchen sind und (ii) mindestens das Fläschchen, das die erste Masse von sauerstoffempfindlichem Fotolumineszenzfarbstoff (51) enthält, eine Sauerstoffsperre ist.

3. Kalibriersatz (100) nach Anspruch 1 oder 2, wobei der sauerstoffempfindliche Fotolumineszenzfarbstoff sowohl in der ersten als auch in der zweiten Masse (51, 52) identisch ist.

4. Kalibriersatz (100) nach Anspruch 2 oder 3, wobei die zweite Masse von sauerstoffempfindlichem Fotolumineszenzfarbstoff (52) in Fluidkommunikation mit der Umgebung steht, wodurch die zweite Masse von Fotolumineszenzfarbstoff (52) einer Umgebungskonzentration von Sauerstoff bei Umgebungsdruck ausgesetzt ist.

5. Kalibriersatz (100) nach einem der Ansprüche 1 bis 4, wobei die Sauerstoffverbrauchsrate für die aktivierte Metall-Luft-Batterie (70) als Ergebnis von Selbstentladung die Permeationsrate von Sauerstoff in den abgedichteten Raum, der die erste Masse von Fotolumineszenzfarbstoff enthält, aus der Umgebungsluft übersteigt.

6. Kalibriersatz (100) nach einem der Ansprüche 1 bis 5, wobei der Kalibriersatz (100) eine Last (71) aufweist und wobei die aktivierte Metall-Luft-Batterie (70) so angeordnet ist, dass sie die Last (71) mit einem Widerstand von mindestens 500.000 Ohm kontinuierlich speist, wodurch die aktivierte Metall-Luft-Batterie (70) zum kontinuierlichen Verbrauchen von Sauerstoff aus dem hermetisch abgedichteten Raum wirksam ist, der die erste Masse von Fotolumineszenzfarbstoff (51) enthält.

7. Kalibriersatz (100) nach einem der Ansprüche 1 bis 5, wobei der Kalibriersatz (100) eine Last (71) aufweist und wobei die aktivierte Metall-Luft-Batterie (70) so angeordnet ist, dass sie die Last (71) mit einem Widerstand kontinuierlich speist, der so ausgewählt ist, dass er die Rate von Sauerstoff, der durch die aktivierte Metall-Luft-Batterie (70) verbrauchbar ist, zwischen (1) der Permeationsrate von Sauerstoff in den abgedichteten Raum, der die erste Masse von Fotolumineszenzfarbstoff (51) enthält, aus der Umgebungsluft und (2) dem Doppelten dieser Rate begrenzt.

8. Kalibriersatz (100) nach einem der Ansprüche 1 bis 7, der mehrere aktivierte Metall-Luft-Batterien (70) aufweist, die im hermetisch abgedichteten Raum bewahrt werden und ausreichen, etwaigen Sauerstoff, der den hermetisch abgedichteten Raum erreicht, mindestens ein Jahr nach Aktivierung der aktivierten Metall-Luft-Batterien (70) weiter zu verbrauchen.

9. Verfahren zur Kalibrierung eines optischen Sauerstoffsensors mit einem Kalibriermodus, das die Schritte aufweist:
(a) Beziehen eines Kalibriersatzes (100) nach einem der Ansprüche 1 bis 8,
(b) Einstellen des optischen Sauerstoffsensors auf den Kalibriermodus und
(c) aufeinanderfolgendes Vornehmen einer Sauerstoffkonzentrationsablesung von jeder der Massen von sauerstoffempfindlichem Fotolumineszenzfarbstoff (51, 52), so dass die Sauerstoffkonzentrationsablesung mit der bekannten Sauerstoffkonzentration korreliert wird, der die Masse von sauerstoffempfindlichem Fotolumineszenzfarbstoff (51, 52) ausgesetzt ist.

10. Verfahren nach Anspruch 9, wobei der Schritt (c) mindestens den Schritt aufweist: Vornehmen einer Sauerstoffkonzentrationsablesung von jeder der Massen von sauerstoffempfindlichem Fotolumineszenzfarbstoff (51, 52) in einer vorbestimmten Reihenfolge.

11. Verfahren nach Anspruch 9 oder 10, wobei der Schritt (c) mindestens die Schritte aufweist: (1) Erfassen der Sauerstoffkonzentration, der eine der Massen von sauerstoffempfindlichem Fotolumineszenzfarbstoff (51, 52) ausgesetzt ist, mit Hilfe des optischen Sensors im Kalibriermodus, (2) Versehen des optischen Sensors mit Daten als Angabe, welche der Massen von sauerstoffempfindlichem Fotolumineszenzfarbstoff (51, 52) im Kalibriersatz (100) erfasst wurde, und (3) Erfassen der Sauerstoffkonzentration, der die andere Masse von sauerstoffempfindlichem Fotolumineszenzfarbstoff (51, 52) ausgesetzt ist, mit Hilfe des optischen Sensors im Kalibriermodus.

12. Verfahren nach einem der Ansprüche 9 bis 11, wobei der Schritt (c) mindestens die Schritte aufweist: (1) Erfassen der Sauerstoffkonzentration, der eine der Massen von sauerstoffempfindlichem Fotolumineszenzfarbstoff (51, 52) ausgesetzt ist, mit Hilfe des optischen Sensors im Kalibriermodus, (2) Versehen des optischen Sensors mit Daten als Angabe der bekannten Sauerstoffkonzentration, der die eine Masse von sauerstoffempfindlichem Fotolumineszenzfarbstoff (51, 52) ausgesetzt ist, (3) Erfassen der Sauerstoffkonzentration, der die andere Masse von sauerstoffempfindlichem Fotolumineszenzfarbstoff (52, 51) ausgesetzt ist, mit Hilfe des optischen Sensors im Kalibriermodus und (4) Versehen des optischen Sensors mit Daten als Angabe der bekannten Sauerstoffkonzentration, der die andere Masse von sauerstoffempfindlichem Fotolumineszenzfarbstoff (52, 51) ausgesetzt ist.

13. Kalibriersatz (100) nach einem der Ansprüche 1 bis 8, wobei (i) der optische Sauerstoffsensor ein Analyseninstrument ist, das eine Fotolumineszenz-Sauerstoffsonde ablesen kann, anhand derer die Konzentration von Sauerstoff in einer mit der Sonde kommunizierenden Probe bestimmt werden kann, wobei die Sonde einen sauerstoffempfindlichen Fotolumineszenzfarbstoff aufweist, der in einer sauerstoffpermeablen Trägermatrix eingebettet ist, und (ii) die erste und zweite Masse von sauerstoffempfindlichem Fotolumineszenzfarbstoff (51, 52) jeweils in einer sauerstoffpermeablen Trägermatrix (58) eingebettet sind, um Sonden zu bilden.

14. Kalibriersatz (100) nach Anspruch 13, wobei die erste und zweite Sonde (51, 52, 58) Sonden sind, die durch Abscheiden einer Flüssigkeit auf den Boden eines getrennten ersten und zweiten Behälters (121, 122) und Trocknenlassen gebildet sind.

15. Kalibriersatz (100) nach Anspruch 14, wobei der getrennte erste und zweite Behälter (121, 122) Fläschchen sind, die aus einem Sauerstoffsperrmaterial gebildet sind.

16. Verfahren zur Kalibrierung eines Analyseninstruments, das einen Kalibriermodus hat und eine Fotolumineszenz-Sauerstoffsonde oder mehrere Fotolumineszenz-Sauerstoffsonden ablesen kann, anhand derer die Konzentration von Sauerstoff in einer Probe oder einem Satz von Proben bestimmt werden kann, die mit der Sonde kommunizieren, mit den Schritten:
(a) Beziehen eines Kalibriersatzes (100) nach einem der Ansprüche 13 bis 15,
(b) Einstellen des Analyseninstruments auf den Kalibriermodus,
(c) Vornehmen einer Ablesung von der ersten Sonde (51) mit dem Analyseninstrument,
(d) Korrelieren des Werts der Ablesung mit einer Sauerstoffkonzentration von null,
(e) Vornehmen einer Ablesung von der zweiten Sonde (52) mit dem Analyseninstrument und
(f) Korrelieren des Werts der Ablesung mit der bekannten Sauerstoffkonzentration, der die zweite Sonde (52) ausgesetzt ist.

17. Verfahren nach Anspruch 16, wobei die Schritte des Vornehmens einer Ablesung von der ersten und zweiten Sonde (51, 52) in einer vorbestimmten Reihenfolge durchgeführt werden.

18. Verfahren nach Anspruch 16 oder 17, das ferner den Schritt aufweist: Versehen des Analyseninstruments mit Daten als Angabe, welche Sonde (51, 52) im Kalibriersatz (100) zuerst abgelesen wurde.

19. Verfahren nach einem der Ansprüche 16 bis 18, wobei Ablesungen und Korrelationen auf der Fotolumineszenz-Lebensdauer beruhen.

## Revendications

1. Kit de calibrage (100) destiné à être utilisé pour calibrer un capteur d'oxygène optique, comprenant
- i) un premier récipient (121) ayant un puits (129), ledit puits (129) définissant un espace fermé hermétiquement et isolé de l'oxygène ambiant,
- ii) une première masse de colorant photoluminescent sensible à l'oxygène (51) placée dans ledit espace fermé hermétiquement défini par le puits (129) dudit premier récipient (121) de façon à isoler la première masse de colorant photoluminescent sensible à l'oxygène (51) de l'oxygène ambiant, et
- iii) une batterie à métal/air activée (70) en communication de fluide avec la première masse de colorant photoluminescent sensible à l'oxygène (51) et placée dans ledit espace fermé hermétiquement défini par le puits (129) dudit premier récipient (121), moyennant quoi la batterie à métal/air activée (70) est prévue pour consommer l'oxygène présent dans l'espace fermé hermétiquement, et
- iv) une seconde masse de colorant photoluminescent sensible à l'oxygène (52) en communication de fluide avec un fluide ayant une concentration en oxygène ambiant, et
- v) un second récipient (122) ayant un puits (129) destiné à contenir ladite seconde masse de colorant photoluminescent sensible à l'oxygène (52).

2. Kit de calibrage (100) selon la revendication 1, dans lequel (i) le premier et le second récipients (121, 122) sont des flacons distincts, et (ii) au moins le flacon contenant la première masse de colorant photoluminescent sensible à l'oxygène (51) est une barrière à l'oxygène.

3. Kit de calibrage (100) selon la revendication 1 ou 2, dans lequel les colorants photoluminescents sensibles à l'oxygène dans la première et la seconde masses (51, 52) sont identiques.

4. Kit de calibrage (100) selon la revendication 2 ou 3, dans lequel la seconde masse de colorant photoluminescent sensible à l'oxygène (52) est en communication de fluide avec l'environnement, moyennant quoi la seconde masse de colorant photoluminescent (52) est exposée à une concentration d'oxygène ambiant à la pression ambiante.

5. Kit de calibrage (100) selon l'une quelconque des revendications 1 à 4, dans lequel le taux de consommation d'oxygène pour la batterie à métal/air activée (70) résultant de l'autodécharge dépasse le taux de perméation de l'oxygène dans l'espace fermé qui contient la première masse de colorant photoluminescent provenant de l'air environnant.

6. Kit de calibrage (100) selon l'une quelconque des revendications 1 à 5, dans lequel le kit de calibrage (100) comprend une charge (71), et dans lequel la batterie à métal/air activée (70) est prévue pour alimenter en continu la charge (71) ayant une résistance d'au moins 500000 ohms, moyennant quoi la batterie à métal/air activée (70) est efficace pour consommer en continu l'oxygène provenant de l'espace fermé hermétiquement qui contient la première masse de colorant photoluminescent (51).

7. Kit de calibrage (100) selon l'une quelconque des revendications 1 à 5, dans lequel le kit de calibrage (100) comprend une charge (71), et dans lequel la batterie à air/métal activée (70) est prévue pour alimenter en continu la charge (71) ayant une résistance choisie pour limiter le taux d'oxygène consommable par la batterie à air/métal activée (70) entre (1) le taux de perméation de l'oxygène dans l'espace fermé qui contient la première masse de colorant photo luminescent (51) provenant de l'air environnant, et (2) deux fois ce taux.

8. Kit de calibrage (100) selon l'une quelconque des revendications 1 à 7, comprenant une pluralité de batteries à métal/air activées (70) qui sont placées dans l'espace fermé hermétiquement et suffisent pour continuer à consommer l'oxygène qui atteint l'espace fermé hermétiquement pendant au moins un an après l'activation des batteries à métal/air activées (70).

9. Procédé de calibrage d'un capteur d'oxygène optique ayant un mode de calibrage, comprenant les étapes consistant à :
(a) obtenir un kit de calibrage (100) selon l'une quelconque des revendications 1 à 8,
(b) placer le capteur d'oxygène optique en mode de calibrage, et
(c) effectuer séquentiellement une mesure de concentration en oxygène à partir de chacune des masses de colorant photoluminescent sensible à l'oxygène (51, 52) de sorte que la mesure de concentration en oxygène soit corrélée avec la concentration en oxygène connue à laquelle la masse de colorant photoluminescent sensible à l'oxygène (51, 52) est exposée.

10. Procédé selon la revendication 9, dans lequel l'étape (c) comprend au moins l'étape de réalisation d'une mesure de concentration en oxygène à partir de chacune des masses de colorant photoluminescent sensible à l'oxygène (51, 52) selon une séquence prédéterminée.

11. Procédé selon la revendication 9 ou 10, dans lequel l'étape (c) comprend au moins les étapes consistant à : (1) détecter la concentration en oxygène à laquelle l'une des masses de colorant photoluminescent sensible à l'oxygène (51, 52) est exposée en utilisant le capteur optique en mode de calibrage, (2) fournir au capteur optique des données indiquant laquelle des masses de colorant photoluminescent sensible à l'oxygène (51, 52) sur le kit de calibrage (100) a été détectée, et (3) à détecter la concentration en oxygène à laquelle l'autre masse de colorant photo luminescent sensible à l'oxygène (51, 52) est exposée en utilisant le capteur optique en mode de calibrage.

12. Procédé selon l'une quelconque des revendications 9 à 11, dans lequel l'étape (c) comprend au moins les étapes consistant à : (1) détecter la concentration en oxygène à laquelle l'une des masses de colorant photoluminescent sensible à l'oxygène (51, 52) est exposée en utilisant le capteur optique en mode de calibrage, (2) fournir au capteur optique des données indiquant la concentration en oxygène connue à laquelle l'une masse de colorant photoluminescent sensible à l'oxygène (51, 52) est exposée, (3) détecter la concentration en oxygène à laquelle l'autre masse de colorant photoluminescent sensible à l'oxygène (52, 51) est exposée en utilisant le capteur optique en mode de calibrage, et (4) à fournir au capteur optique des données indiquant la concentration en oxygène connue à laquelle l'autre masse de colorant photoluminescent sensible à l'oxygène (52, 51) est exposée.

13. Kit de calibrage (100) selon les revendications 1 à 8, dans lequel (i) le capteur d'oxygène optique est un instrument d'analyse capable de lire une sonde à oxygène photoluminescent à partir de laquelle la concentration en oxygène dans un échantillon communiquant avec la sonde peut être déterminée, dans lequel la sonde comprend un colorant photoluminescent sensible à l'oxygène intégré dans une matrice porteuse perméable à l'oxygène, et (ii) la première et la seconde masses de colorant photoluminescent sensible à l'oxygène (51, 52) sont chacune intégrées dans une matrice porteuse perméable à l'oxygène (58) de façon à former des sondes.

14. Kit de calibrage (100) selon la revendication 13, dans lequel la première et la seconde sondes (51, 52, 58) sont des sondes formées en déposant un liquide au fond du premier et du second récipients distincts (121, 122) et que l'on a laissé sécher.

15. Kit de calibrage (100) selon la revendication 14, dans lequel le premier et le second récipients distincts (121, 122) sont des flacons formés en matériau barrière d'oxygène.

16. Procédé de calibrage d'un instrument d'analyse ayant un mode de calibrage et capable de lire une sonde à oxygène photoluminescent ou une pluralité de sondes à oxygène photoluminescent à partir desquelles la concentration en oxygène dans un échantillon ou un groupe d'échantillons communiquant avec la sonde peut être déterminée, comprenant les étapes consistant à :
(a) obtenir un kit de calibrage (100) selon l'une quelconque des revendications 13 à 15,
(b) placer l'instrument d'analyse en mode de calibrage,
(c) effectuer une mesure à partir de la première sonde (51) avec l'instrument d'analyse,
(d) corréler la valeur de la mesure avec une concentration en oxygène nulle,
(e) effectuer une mesure à partir de la seconde sonde (52) avec l'instrument d'analyse, et
(f) corréler la valeur de la mesure avec la concentration en oxygène connue à laquelle la seconde sonde (52) est exposée.

17. Procédé selon la revendication 16, dans lequel les étapes de mesure à partir de la première et de la seconde sondes (51, 52) sont effectuées selon une séquence prédéterminée.

18. Procédé selon la revendication 16 ou 17, comprenant en outre l'étape qui consiste à fournir à l'instrument d'analyse des données indiquant quelle sonde (51, 52) sur le kit de calibrage (100) a été lue en premier.

19. Procédé selon l'une quelconque des revendications 16 à 18, dans lequel les mesures et les corrélations reposent sur la durée de vie de la photoluminescence.
